# EUROPEAN PATENT APPLICATION

(11) **EP 1 897 495 A1**
(43) Date of publication of application: **12.03.2008**
(21) Application number: 06767227.9
(22) Date of filing: 23.06.2006
(51) Int. Cl.: A61B 6/00, A61B 5/00, A61B 6/03

(54) **ABNORMAL SHADOW CANDIDATE DETECTING METHOD, ABNORMAL SHADOW CANDIDATE DETECTING DEVICE**

(30) Priority: 28.06.2005 JP 2005188091; 05.08.2005 JP 2005227902
(71) Applicant: Konica Minolta Medical & Graphic, Inc., Hino-shi, Tokyo 191-8511 (JP)
(72) Inventor: FUTAMURA, H., Konica Minolta Med. & Graphic, Inc., Tokyo 163-0512 (JP)
(74) Representative: Henkel, Feiler & Hänzel
(86) International application number: PCT/JP2006/312577
(87) International publication number: WO 2007/000940

(57) **Abstract**

An abnormal shadow candidate detecting method, including a first smoothing processing process that performs a first smoothing processing of an inputted medical image, using a first smoothing filter; a second smoothing processing process that performs a second smoothing processing on the medical image processed in the first smoothing processing process, using a second smoothing filter; an extracting process that extracts a detection object area for an abnormal shadow candidate in a size of a lesion part to be detected, based on the medical image processed with the first smoothing processing and the medical image processed with the second smoothing processing; and an abnormal shadow candidate detecting process that performs detection of the abnormal shadow candidate, in the detection object area extracted from the inputted medical image.

## Description

### TECHNICAL FIELD

The present invention relates to an abnormal shadow candidate detecting method and abnormal shadow candidate detecting device for detection of an abnormal shadow candidate from a medical image.

### TECHNICAL BACKGROUND

In the medical field, digitization of medical images have been realized, wherein medical image data produced by a CR (Computed Radiography) device or the like is displayed on a monitor, and a doctor reads the medical image displayed on the monitor and makes a diagnosis, based on observation of the state of a lesion part and a change with elapsed time in the lesion part.

Conventionally, to reduce a load on the doctor in such image reading, abnormal shadow candidate detecting devices have been developed which are called computer-aided diagnosis devices (hereinafter, referred to as CAD) and automatically detect the shadow of a lesion part appearing on an image, as an abnormal shadow candidate, by image-processing of the medical image data.

The shadow of a lesion part often has a characteristic density distribution. A CAD detects an image area that is judged to be a lesion part, based on such a density characteristic, as an abnormal shadow candidate area.

For the above described CAD, various detection algorithms have been developed corresponding to the kinds of lesions as detection objects, and a method using an iris filter and other methods have been presented as an optimal algorithm for detection of a tumor shadow. Further, as an optimal algorithm for detection of a microcalcification cluster shadow, a method using a morphology filter and the like have been presented.

However, there is a problem with detection of an abnormal shadow candidate that arithmetic-processing of an entire image pixel by pixel takes an extremely long time. Further, there is another problem of detecting the area of a noise or a normal organization, which is not a lesion part, as an abnormal shadow.

In this situation, in Patent Document 1 for example, a technology for reducing the processing time is disclosed in which arranged is an algorithm selection means for selecting one or more abnormal shadow candidate detection algorithms, corresponding to detection objects, when abnormal shadow detection objects of plural kinds are present in the same photographed part. Herein, the above described technology allows a doctor to select only an algorithm that the doctor needs so that the processing time is reduced. Further, Patent Document 2 discloses a technology which, in cases such as where a doctor has a prediction, to some extent, of the presence area of an abnormal shadow candidate, where an abnormal shadow candidate was detected in another image, such as an image obtained before, or in other cases, applies an abnormal shadow candidate detection algorithm, designating only the concerned area.
Patent Document 1: Japanese Unexamined Patent Application Publication No. 2002-112986
Patent Document 2: Japanese Unexamined Patent Application Publication No. 2001-346787

### DISCLOSURE OF THE INVENTION

### PROBLEMS TO BE SOLVED BY THE INVENTION

According to Patent Document 1, however, since an entire image is subjected to arithmetic-processing pixel by pixel by the use of a selected abnormal shadow candidate detection algorithm, the processing time is reduced, compared with a case of using plural unnecessary abnormal shadow candidate detection algorithms. However, this technology still has a problem of requiring a long processing time for searching an entire image and also a problem of detecting an area of a noise or normal organization, which is not a lesion part, as an abnormal shadow. Further, according to Patent Document 2, there is a problem that an abnormal shadow, if any, cannot be detected in areas other than an area which a doctor predicts or an area where an abnormal shadow was detected before. Further, as a designated area is subjected to arithmetic-processing pixel by pixel, it is possible that an area of a noise or normal organization, which is not a lesion part, is detected as an abnormal shadow, even limiting the search area. Still further, it is not possible to detect abnormal shadow candidates, with categorization of sizes.

In order to address such a situation, the present invention is aimed at restricting the number of false positives and improving the detection accuracy at the time of detecting abnormal shadow candidates, and reducing the processing time for detecting abnormal shadow candidates.

### MEANS FOR SOLVING THE PROBLEMS

To solve the above described problems, claim 1 discloses an abnormal shadow candidate detecting method, comprising:
a first smoothing processing process that performs a first smoothing processing of an inputted medical image, using a first smoothing filter;
a second smoothing processing process that performs a second smoothing processing on the medical image processed in the first smoothing processing process, using a second smoothing filter;
an extracting process that extracts a detection object area for an abnormal shadow candidate in a size of a lesion part to be detected, based on the medical image subjected to the first smoothing processing and the medical image subjected to the second smoothing processing; and
an abnormal shadow candidate detecting process that performs detection of the abnormal shadow candidate, in the detection object area extracted from the inputted medical image.

Claim 2 discloses the abnormal shadow candidate detecting method of claim 1, further comprising a reducing process that reduces the inputted medical image, wherein the first smoothing processing process performs the first smoothing processing of the reduced medical image.

Claim 3 discloses the abnormal shadow candidate detecting method of claim 1 or 2, wherein the inputted medical image comprises pixel values indicating densities;
the first smoothing processing process smoothes a first area in the inputted medical image, using the first smoothing filter, the first area being smaller than the abnormal shadow candidate area to be detected by the abnormal shadow candidate detecting process and having low densities compared with a surrounding area;
the second smoothing processing process smoothes an a second area in the medical image processed with the first smoothing processing, using the second smoothing filter, the second area having a similar size to the abnormal shadow candidate area to be detected and having low densities compared with a surrounding area; and
the extracting process extracts a detection object area for the abnormal shadow candidate by obtaining differences between values of pixels of the medical image processed with the second smoothing processing and values of corresponding pixels of the medical image processed with the first smoothing processing.

Claim 4 discloses the abnormal shadow candidate detecting method of any one of claims 1 to 3, wherein an abnormal shadow to be detected is a tumor shadow.

Claim 5 discloses an abnormal shadow candidate detecting device, comprising:
a first smoothing processing unit that performs a first smoothing processing of an inputted medical image, using a first smoothing filter;
a second smoothing processing unit that performs a second smoothing processing of the medical image processed by the first smoothing processing unit, using a second smoothing filter;
an extracting unit that extracts a detection object area, for an abnormal shadow candidate in a size of a lesion part to be detected, based on the medical image subjected to the first smoothing processing and the medical image subjected to the second smoothing processing; and
an abnormal shadow candidate detecting unit that performs detection of the abnormal shadow candidate, in the detection object area extracted from the inputted medical image.

Claim 6 discloses the abnormal shadow candidate detecting device of claim 5, further comprising a reducing unit that reduces the inputted medical image, wherein the first smoothing processing unit performs the first smoothing processing of the reduced medical image.

Claim 7 discloses the abnormal shadow candidate detecting device of claim 5 or 6, wherein the inputted medical image comprises pixel values indicating densities;
the first smoothing processing unit smoothes a first area in the inputted medical image, using the first smoothing filter, the first area being smaller than the abnormal shadow candidate area to be detected by the abnormal shadow candidate detecting unit and having low densities compared with a surrounding area;
the second smoothing processing unit smoothes a second area in the medical image subjected to the first smoothing processing, using the second smoothing filter, the second area having a similar size to the abnormal shadow candidate area to be detected and having low densities compared with a surrounding area; and
the extracting unit extracts a detection object area for the abnormal shadow candidate by obtaining differences between values of pixels of the medical image subjected to the second smoothing processing and values of corresponding pixels of the medical image subjected to the first smoothing processing.

Claim 8 discloses the abnormal shadow candidate detecting device of any one of claims 5 to 7, wherein the abnormal shadow to be detected is a tumor shadow.

Claim 9 discloses an abnormal shadow candidate detecting method, comprising:
a filter setting process that sets a first smoothing filter and a second smoothing filter, corresponding to a size of a lesion part to be detected from an inputted medical image;
an extracting process that extracts a detection object area, for an abnormal shadow candidate in a size of the lesion part to be detected from the inputted medical image, using the first smoothing filter and the second smoothing filter having been set; and
an abnormal shadow candidate detecting process that performs detection of the abnormal shadow candidate on the detection object area extracted from the inputted medical image.

Claim 10 discloses the abnormal shadow candidate detecting method of claim 9, further comprising an input process for input of the size of the lesion part to be detected, wherein the filter setting process sets the first smoothing filter and the second smoothing filter, corresponding to the inputted size of the lesion part.

Claim 11 discloses the abnormal shadow candidate detecting method of claim 9 or 10, further comprising a reducing process that reduces the inputted medical image, wherein the extracting process extracts the detection object area for the abnormal shadow candidate in the size of the lesion part to be detected, using the reduced medical image.

Claim 12 discloses the abnormal shadow candidate detecting method of any one of claims 9 to 11, wherein the inputted medical image comprises pixel values indicating densities;
the first smoothing filter has a mask size corresponding to a minimum size of the lesion part to be detected;
the second smoothing filter has a mask size corresponding to a maximum size of the lesion part to be detected; and
the extracting process generates a first smoothed image, using the first smoothing filter, by smoothing a first area in the inputted medical image, the first area being smaller than the lesion part to be detected and having low densities compared with a surrounding area, generates a second smoothed image, using the second smoothing filter, by smoothing a second area in the first smoothed image, the second area having a similar size to the lesion part to be detected and having low densities compared with a surrounding area, and extracts the detection object area for the abnormal shadow candidate by obtaining differences between values of pixels of the first smoothed image and values of corresponding pixels of the second smoothed image.

Claim 13 discloses the abnormal shadow candidate detecting method of any one of claims 9 to 12, wherein an abnormal shadow to be detected is a tumor shadow.

Claim 14 discloses an abnormal shadow candidate detecting device, comprising:
a filter setting unit that sets a first smoothing filter and second smoothing filter, corresponding to a size of a lesion part to be detected from an inputted medical image;
an extracting unit that extracts a detection object area for an abnormal shadow candidate in a size of the lesion to be detected from the inputted medical image, using the first smoothing filter and the second smoothing filter having been set; and
an abnormal shadow candidate detecting unit that performs detection of the abnormal shadow candidate in the detection object area extracted from the inputted medical image.

Claim 15 discloses the abnormal shadow candidate detecting device of claim 14, further comprising an input unit for input of the size of the lesion part to be detected, wherein the filter setting unit sets the first smoothing filter and the second smoothing filter, corresponding to the inputted size of the lesion part.

Claim 16 discloses the abnormal shadow candidate detecting device of claim 14 or 15, further comprising a reducing unit that reduces the inputted medical image, wherein the extracting unit extracts the detection object area for the abnormal shadow candidate in the size of the lesion part to be detected, using the reduced medical image.

Claim 17 discloses the abnormal shadow candidate detecting device of any one of claims 14 10 16, wherein the inputted medical image comprises pixel values indicating densities;
the first smoothing filter has a mask size corresponding to a minimum size of the lesion part to be detected;
the second smoothing filter has a mask size corresponding to a maximum size of the lesion part to be detected; and
the extracting unit produces a first smoothed image, using the first smoothing filter, by smoothing a first area in the inputted medical image, the first area being smaller than the lesion part to be detected and having low densities compared with a surrounding area, produces a second smoothed image, using the second smoothing filter, by smoothing a second area in the first smoothed image, the second area having a similar size to the lesion part to be detected and having lower densities compared with a surrounding area, and extracts the detection object area for the abnormal shadow candidate by obtaining differences between values of pixels of the first smoothed image and values of corresponding pixels of the second smoothed image.

Claim 18 discloses the abnormal shadow candidate detecting device of any one of claims 14 10 17, wherein an abnormal shadow to be detected is a tumor shadow.

### EFFECTS OF THE INVENTION

According to claims 1, 3, 5, and 7 of the invention, since a detection object area for an abnormal shadow candidate in a size of a lesion part to be detected in a medical image can be limited, it is possible to restrict the number of false positives (number of FPs) at the time of detecting the abnormal shadow candidate, improve the detection accuracy and attain reduction of the processing time at the time of detecting the abnormal shadow candidate.

According to claims 2 and 6 of the invention, since a reduced medical image is used to extract the detection object area, for the abnormal shadow candidate, in the size of the lesion part to be detected, it is possible to reduce the processing time.

According to claims 4 and 8 of the invention, it is possible to restrict the number of false positives (number of FPs) at the time of detecting a tumor shadow, improve the detection accuracy and attain reduction of the processing time at the time of detecting the tumor shadow.

According to claims 9, 12, 14, and 17 of the invention, since a detection object area for the abnormal shadow candidate in a medical image can be limited corresponding to the size of a lesion part to be detected, it is possible to restrict the number of false positives (number of FPs) at the time of detecting the abnormal shadow candidate, improve the detection accuracy and attain reduction of the processing time at the time of detecting the abnormal shadow candidate.

According to claims 10 and 15 of the invention, an operator is allowed to designate the size of the lesion part to be detected from the medical image.

According to claims 11 and 16 of the invention, since the reduced medical image is used to extract the detection object area for the abnormal shadow candidate, it is possible to reduce the processing time.

According to claims 13 and 18 of the invention, it is possible to restrict the number of false positives (number of FPs) at the time of detecting a tumor shadow, improve the detection accuracy and attain reduction of the processing time at the time of detecting the tumor shadow.

### BRIEF DESCRIPTION OF THE DRAWINGS

Fig. 1 is a diagram showing the entire structure of a medical image system 100 in accordance with the invention;
Fig. 2 is a block diagram showing the functional structure of the image processing device 2 in Fig. 1;
Fig. 3 is a flowchart showing abnormal shadow candidate detection processing in accordance with a first embodiment carried out by the CPU 21 in Fig. 2;
Fig. 4 is a flowchart showing the area extracting processing in Fig. 3;
Figs. 5(a) to 5(d) are diagrams schematically showing image data produced in each step of the area extracting processing in Fig. 4;
Fig. 6 is a diagram illustrating a first smoothing filter;
Fig. 7 is a diagram illustrating a second smoothing filter;
Fig. 8 is a diagram showing the processing procedure in a case of extracting detection object areas with categorization in size, through plural times of processing, changing the mask size of the first smoothing filter and the mask size of the second smoothing filter; and
Fig. 9 is a flowchart showing abnormal shadow candidate detection processing in accordance with a second embodiment carried out by the CPU 21 in Fig. 2.

### DESCRIPTION OF REFERENCE SYMBOLS

- 100: breast image producing system
- 1: image producing device
- 2: image processing device
- 21: CPU
- 22: operation section
- 23: display section
- 24: RAM
- 25: storage section
- 26: communication control section
- 27: bus

### DETAILED DESCRIPTION OF THE PREFERRED EMBODIMENTS

In the following description, an embodiment in accordance with claims 1 to 8 is referred to as a first embodiment, and an embodiment in accordance with claims 9 to 18 is referred to as a second embodiment. Description common to the first embodiment and the second embodiment is referred to as a present embodiment.

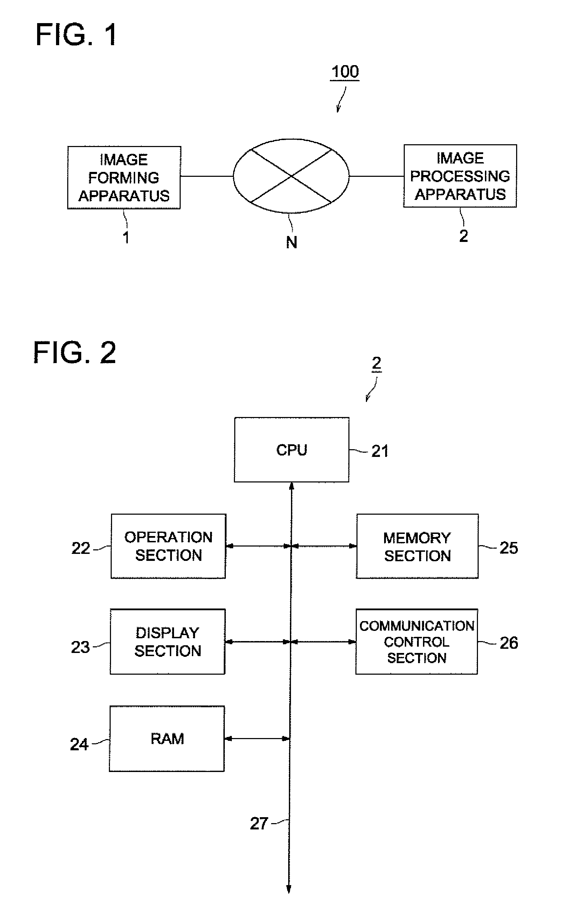

First, a structure in the present embodiment will be described, referring to Figs. 1 and 2.

Fig. 1 shows an entire structure of a medical image system 100 in the present embodiment. As shown in Fig. 1, the medical image system 100 is connected to an image producing device 1, an image processing device 2 and the like via a network N, being allowed to transmit and receive data each other.

In the present embodiment, an example will be described in which the image producing device 1 and the image processing device 2 are connected via a network. However, the invention is not limited thereto, and a system configuration directly connected by a cable is also applicable. Further, the number of the respective devices and/or units and installation sites are not particularly limited. Still further, the medical image system 100 may be configured, being connected with a server that stores and manages image data of an medical image produced by the image producing device 1, a monitor that displays a detection result, by the image processing device 2, of an abnormal shadow candidate in the size of a lesion part to be detected and displays a processed image, a film output device that outputs a film of the detection result, by the image processing device 2, of the abnormal shadow candidate in the size of the lesion part to be detected and a film of a processed image.

As the network N, various forms of lines are applicable, including LAN (Local Area Network), WAN (Wide Area Network). Internet, and the like. Herein, if permitted in a medical institution, such as a hospital or the like, wireless communication, infrared communication, or the like may be applicable, wherein information transmitted and received is preferably encrypted because it contains important information on a patient.

The image producing device 1 includes a modality, for example, a CR (Computed Radiography), FPD (Flat Panel Detector), CT (Computed Tomography), MRI (Magnetic Resonance Imaging) or the like, and produces image data of a medical image through photographing a human body and digital conversion of the photographed image. In the present embodiment, the image producing device 1 will be described as a device that performs radiation photographing of a breast and produces image data of a breast image. Herein, the image producing device 1 allows input and automatic production of image supplemental information (hereinafter, referred to as supplemental information) to the breast image. The image producing device 1 is assumed to output the image data of the produced breast image along with the supplemental information to the produced breast image as header information of the image data thereof via the network N to the image processing device 2.

As the supplemental information to the breast image, contained is photographing information including, for example, the patient name of the photographed patient, patient ID, age, patient information on the patient such as a mammary amount, photographing date, testing ID, photographed part, photographing conditions (distraction between left and right breast, photographing direction, pressing pressure, and the like), information on the image producing device (modality type) and the like.

The image processing device 2 is an abnormal shadow candidate detection device that performs abnormal shadow candidate detection processing of image data provided from the image producing device 1.

The inner structure of the image processing device 2 will be described below.

Fig. 2 shows a function structure of the image processing device 2. As shown in Fig. 2, the image processing device 2 includes a CPU 21, operation section 22, display section 23, RAM 24, storage section 25, communication section 26 and the like, the respective sections being connected by a bus 27.

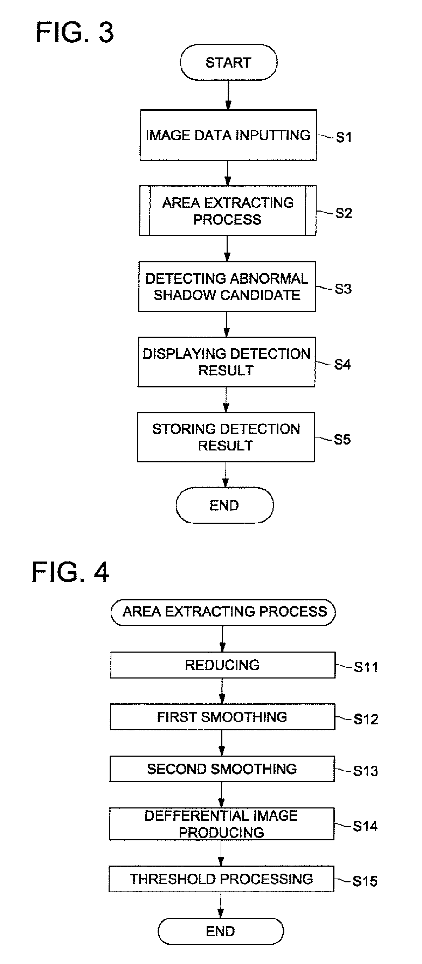

The CPU 21 reads out a system program stored in the storage section 25, loads the system program in a work area formed in the RAM 24, and controls the respective sections, according to the system program. The CPU 21 reads out various processing programs stored in the storage section 25, including an abnormal shadow candidate detection processing program, loads the programs in the work area, and executes various processings, including abnormal shadow candidate detection processing (see Fig. 3) described later.

The operation section 22 includes a keyboard provided with cursor keys, numeric input keys, and various function keys, and pointing devices, such as a mouse. The operation section 22 outputs to the CPU 21 instruction signals inputted by key operations with keyboards and mouse operation. Further, the operation section 22 may be provided with a touch panel on the display screen on the display section 23, and in this case, the operation section 22 outputs instruction signals inputted via the touch panel to the CPU 21.

The display section 23 includes a LCD (Liquid Crystal Display) and a monitor, such as a CRT, and displays an image, upon instruction by a display signal inputted from the CPU 21.

In various processings executed and controlled by the CPU 21, the REAM 24 forms a work area for temporary storage of various programs executable by the CPU 21 read out from the storage section 25, input or output data, parameters, and the like.

The storage section 25 includes a HDD (Hard Disc Drive), nonvolatile semiconductor memory and the like, and stores the system program executed by the CPU 21, various programs, such as the abnormal shadow candidate detection processing program corresponding to the system program, various data and the like. These various programs are stored in a form of a readable program code, and the CPU 21 sequentially executes operations in accordance with the program code.

Further, the storage section 25 correspondingly stores data of a photographed medical image and abnormal shadow candidate detecting data for the medical image (such as supplemental information to the medical image (including patient information), information on the size of a lesion part to be a detection object in the medical image (for example, the range of the size of the lesion part to be the detection object, the mask sizes of the first smoothing filter and the second smoothing filter used to extract a detection object area), and a detection result (number of detections and the like) of abnormal shadow candidates in the medical image) and the like).

The communication control section 26 includes a LAN adapter, router, TA (Terminal Adapter) and the like, and controls communication between various devices connected to the network N.

Next, operations in the present embodiment will be described.

Fig. 3 is a flowchart showing abnormal shadow candidate detection processing in accordance with the first embodiment carried out by the CPU 21 in Fig. 2 of the image processing device 2. The CPU 21 executes the abnormal shadow candidate detection processing by software processing in collaboration with the abnormal shadow candidate detection processing program stored in the storage section 25.

Herein, a primary lesion diagnosed in the breast image can be, for example, a tumor shadow, a microcalcification cluster, or the like. A tumor shadow is a mass in a certain size, and displayed on a breast image to be a whitish rounded shadow like a Gaussian distribution. A microcalcification cluster is displayed to be a small whitish shadow in a substantially cone structure on a breast image. That is, a drop in the density value is observed at the lesion part on the breast image. In the following abnormal shadow candidate detection processing, based on the characteristics of the lesion part image on the breast image, a detection object area for an abnormal shadow candidate is extracted, and thereafter, detection of the abnormal shadow candidate is carried out on the detection object area. The present embodiment will be described, taking an example of a case of detecting a tumor shadow.

First, image data D of a breast image produced through photographing of a breast by the image producing device 1 is input via the communication control section 26 and stored in the work area of the RAM 24 (step S1).

Next, the inputted image data D is subjected to area extraction processing (step S2). The area extraction processing extracts a detection object area, corresponding to the size of a lesion part to be detected, from the entire area of the image data D.

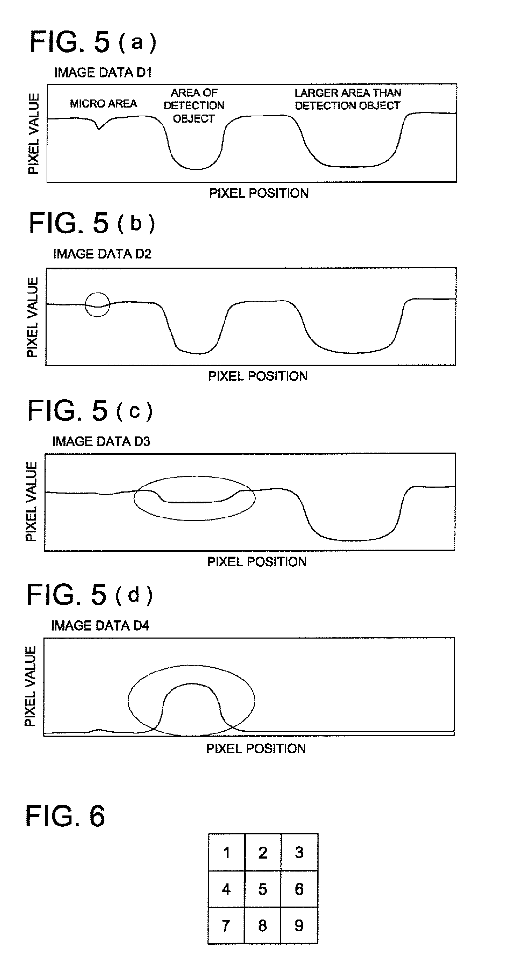

The area extraction processing will be described in detail below, referring to Figs. 4 and 5.

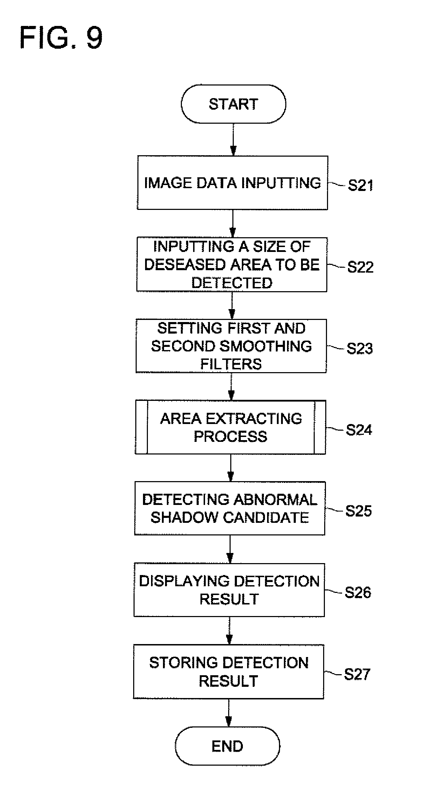

Fig. 4 is a flowchart showing the area extraction processing executed by the CPU 21 in step S2, shown in Fig. 3 which is a flowchart for explaining the operation in accordance with the first embodiment. Fig 4 is also a flowchart showing the area extraction processing executed by the CPU 21 in step S24 in Fig. 9 being a flowchart for explaining the operation in accordance with the second embodiment described later.

Figs. 5(a) to 5(d) are diagrams schematically showing an image before the area extraction processing in Fig. 4 and a processing result on the image in each step of the area extraction processing. In Figs. 5(a) to 5(d), the horizontal axis indicates pixel positions on a certain line (The same line is commonly shown in Figs. 5(a) to 5(d).) on image data (image data D1 to D4), and the vertical axis indicates pixel values (density values).

First in the area extraction processing in Fig. 4, the image data D is subjected to reduction processing to produce image data D1 at a sampling pitch of approximately 1.6 mm (step S11). For example, if the sampling pitch of the image data D is 100 µm, the vertical and the horizontal sides are respectively reduced to 1/16. For the reduction processing algorithm, various methods may be employed, such as taking an average of pixel values in the vicinity, decimating by a constant pixel interval or the like. By reducing the image data D here, it is possible to reduce the processing time for processing thereafter.

As shown in Fig. 5(a), the breast image contains an area (detection object area) being substantially in the same size as the lesion part to be detected and having lower densities than a surrounding area, an area (micro area) being smaller than the lesion part to be detected and having lower densities than a surrounding area, and an area (an area larger than the object) being larger than the lesion part to be detected and having lower densities than a surrounding area. In the processing steps after the area extraction processing, a low density area being substantially in the same size as the lesion part to be detected from the reduced image data D1 is extracted as the detection object area. In the processing hereafter, description will be made, taking an example of a case of detecting a tumor shadow candidate approximately in a size from 5 mm to 15 mm.

When the image data D is reduced and image data D1 is produced, the reduced image data D1 is subjected to the first smoothing processing and image data D2 is produced (step S12).

The first smoothing processing applies the first smoothing filter (see Fig. 6) of a mask size 3x3, to the image data D1 to produce the image data D2. The first smoothing filter is a median filter that sets a square area (mask) with a target pixel of the image data D1 at the center, sorts pixel values in the mask in the descending order, and defines the median value as the pixel value of the target pixel. In the case of a median filter with a mask size of 3x3, pixel values of the areas 1 to 9 shown in Fig. 6 are sorted in the descending order, and the median value thereof is defined as the pixel value of the area 5. This operation is repeated, shifting the position of the mask pixel by pixel, and all the pixels of the image data D1 are subjected to this operation in such a manner. Thus, as shown in Fig. 5(b), a micro area both of which vertical width and horizontal width are up to approximately 4.8 mm (1.6 mm x 3} is smoothed.

Next, the image data D2 is subjected to the second smoothing processing to produce image data D3 (step S13).

The second smoothing processing applies the second smoothing filter with a mask size of 7x7 to the image data D2 to produce the image data D3.

The second smoothing filter includes a maximum value filter that defines the maximum value of the pixel values in the mask size as the value of a target pixel at the center, and a minimum value filter that defines the minimum value of the pixel values in the mask size as the value of the target pixel at the center. The second smoothing filter applies the maximum filter to the image data D2 and then applies the minimum filter, thereby covering of dropping (a recession) of pixel values, the recession being approximately in the same size of the mask. In general, a tumor shadow has a characteristic that the X-ray transmission density drops toward the center. In the second smoothing processing, by applying the second smoothing filter approximately in a mask size corresponding to the size of the tumor shadow to be detected, to the image data D2, it is possible to cover a low density area approximately in the same size as the tumor shadow to be detected.

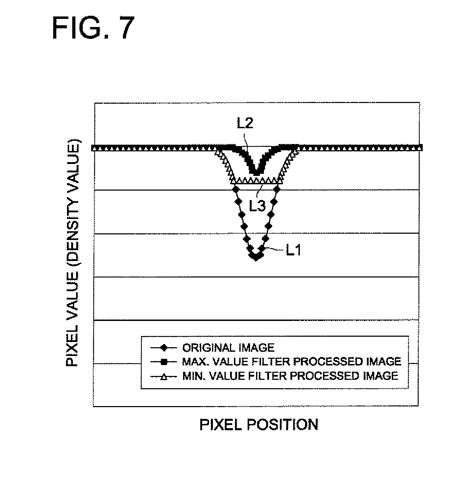

Now, referring to Fig. 7, the principle of the second smoothing filter will be described, taking an example of a one-dimensional data array. In Fig. 7, the horizontal axis indicates pixel positions of the one-dimensional data array, and the vertical axis indicates the pixel values (density values) of the one-dimensional data array.

L1 in Fig. 7 is a data array of an original image. A pixel is defined as a target pixel in the order starting with the left end position of the data array of the original image; a maximum value filter in a mask size of vertical 1 x horizontal 7 is set with the target pixel at the center; and the maximum value in the range of the mask is defined as the pixel value of the target pixel. By shifting this operation pixel by pixel to the right, the data array shown as L2 in Fig. 7 can be obtained. The data array shown by L2 is input; a pixel is defined as a target pixel in the order starting with the left end position; a minimum value filter in a mask size of vertical 1 x horizontal 7 is set with the target pixel at the center; and the minimum value in the range of the mask is defined as the pixel value of the target pixel. Thus, a data array can be obtained on which the dropping of density values of the original data array L1 has been smoothed.

In this way, the second smoothing filter allows smoothing of a low density area in approximately the same size as an abnormal shade candidate area to be detected.

When the second smoothing processing has been completed, a difference image production processing is performed, in which the difference between pixel values of the image data D3 shown in Fig. 5(c) and the image data D2 shown in Fig. 5(b) at corresponding same pixel positions are obtained to produce the difference image (image data D4) shown in Fig. 5(d) (step S14). Then the image data D4 is threshold-processed by a preset threshold value, and only data having pixel values exceeding the threshold value are extracted (step S15), so as to produce image data D5 in a low density area in approximately the same size as the abnormal shadow candidate area to be detected.

Incidentally, in the above described area extraction processing, the minimum size of the detection object area to be extracted is defined by the mask size and sampling pitch of the first smoothing filter, and the maximum size of the detection object area to be extracted is defined by the mask size of the second smoothing filter and the sampling pitch. In other words, the size of an area as a detection object for an abnormal shadow candidate can be changed by changing the mask size of the first smoothing filter used in the first smoothing processing in step S12 in Fig. 4 and the mask size of the second smoothing filter used in the second smoothing processing in step S13 in Fig. 4.

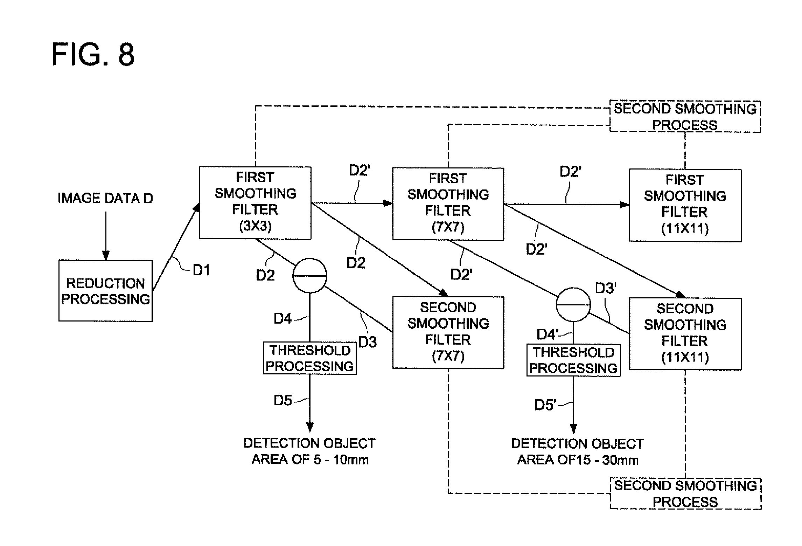

Further, as shown in Fig. 8, by changing the mask size of the first smoothing filter used in the first smoothing processing in step S12 in Fig. 4 and the mask size of the second smoothing filter used in the second smoothing processing in step S13 in Fig. 4, a repeat of processing for plural times allows extraction of detection object areas in classification by size. For example, first, the image data D2 is produced by the use of the first smoothing filter in a mask size of 3x3 in step S12 in Fig. 4, then the image data D2 is processed by the second smoothing filter in a mask size of 7x7 to produce image data D3, and the difference between the image data D3 and the image data D2 is obtained and subjected to threshold-processing so that a detection object area in a size approximately 5 mm to 15 mm is extracted. Next, the image data D2 is further subjected to the first smoothing filter in the mask size of 7x7 to produce image data D2', then the image data D2' is subjected to the second smoothing filter in a mask size of 11x11 to produce image data D3', and the difference between the image data D3' and the image data D2' is obtained and subjected to threshold-processing so that a detection object area in a size approximately 15 mm to 30 mm is extracted. In such a manner, a detection object area in a size of approximately 5 mm to 15 mm and a detection object area in a size of approximately 15 mm to 30 mm can be respectively extracted.

Since a tumor shadow is substantially circular, the same processing can be applied commonly in the vertical and horizontal direction of image data, and extracted areas and the tumor shadow can be easily related to each other. Accordingly, it is particularly preferable to perform the above described area extraction processing.

In Fig. 3, when the area extraction processing is completed, image data D5 extracted from the image data D is subjected to detection of the abnormal shadow candidate (step S3).

As an algorithm for detection of an abnormal shadow candidate, various algorithms have been developed, corresponding to the kinds of lesions to be detection objects, and a method using an iris filter, and the like are presented as an optimal algorithm for detection of a tumor shadow. Further, as an optimal algorithm for detection of a microcalcification cluster shadow, a method using a morphology filter and the like are presented (Japanese Patent Application Publication TOKKAI No. 2001-346787). Still Further, as an optimal algorithm for detection of a tumor shadow and a microcalcification cluster shadow, a method using a curvature is presented. In the present embodiment, a case will be described where a method of detecting a tumor shadow candidate using an iris filter is employed as an algorithm for detection of an abnormal shadow candidate.

It is known that a tumor shadow in a radiation image of a breast has, in general, low density values compared with a surrounding image portion, wherein the distribution of the density values has a gradient of density values in which the density values become lower from the edge portion of a substantially circular shape to the central portion. Accordingly, in a tumor shadow, local gradients of density values are observed, and such gradient lines concentrate toward the center of the tumor. An iris filter calculates gradients of image signals represented by these density values as gradient vectors, and outputs the degree of concentration of the gradient vectors. The iris filter detects the candidate area of a tumor shadow, based on the degree of concentration and other characteristic amounts.

First, an arbitrary target pixel is set in a detection object area (an image area extracted as image data D5) for an abnormal shadow candidate in image data D. Then, characteristic amounts of an image are calculated for the set target pixel. First, characteristic amounts, such as the concentration degrees of the direction component and the intensity component of density gradients in the surroundings of the target pixel (for example, an area in a predetermined mask size) are obtained. Further, other characteristic amounts, such as the contrast, standard deviation, and fractal dimension in the surroundings of the target pixel are obtained. When having been calculated, the various characteristic amounts are compared with a threshold value for detection of the abnormal shadow candidate, the threshold value having been set in advance for the respective characteristic amounts. According to a result of the comparison, it is determined whether it is highly possible that the surrounding area of the target pixel is the abnormal shadow. When it is determined that it is highly possible that it is the abnormal shadow, the surrounding area of the target pixel is detected as a candidate area of the abnormal shadow. In the entire detection object area, respective target pixels are set, and detection of an abnormal shadow candidate is repeated.

In such a manner, for detection of an abnormal shadow candidate, pixels in a detection object area are searched one by one as a target pixel, and it is determined whether it is highly possible that the surrounding area thereof is the abnormal shadow.

After detecting an abnormal shadow candidate, the operation proceeds to step S4 in Fig. 3, and an abnormal shadow candidate detection result is displayed on the display section 23 (step S4). For example, a breast image based on image data D is displayed on the display section 23, and the detected candidate area as an abnormal shadow candidate is recognizably displayed on the breast image, indicated by an arrow (annotation), displayed in color, or in some other way. Further, characteristic amounts in the abnormal shadow candidate may be displayed. Then, data of the medical image having been photographed and the abnormal shadow candidate detection data (supplemental information to the medical image, information on the size of the tumor shadow as the detection object in the medial image, information on the detection result of the abnormal shadow candidate in the medical image, and the like) are related to each other and stored in the storage section 25 (step S5), and the processing is completed.

As have been described above, the image recording device 2 in the first embodiment reduces image data D of the original image to produce image data D1; applies the first smoothing filter to the image data D1 to produce image data D2 having a micro low density area smoothed; applies the second smoothing filter to the image data D2 to produce image data D3 being in a size approximately the same as an abnormal shadow candidate area to be detected and having a low density area smoothed; obtains the differences between the pixel values of the image data D3 and the pixel values of the image data D2 at the respective same positions to produce difference image data D4; threshold-processes the image data D4 so as to extract image data D5 in a low density area in the size of the detection object; and then detects the abnormal shadow candidate in the extracted area of the image data D5.

Consequently, since a search area for detection of an abnormal shadow candidate in a breast image produced by the image producing device 1 can be limited corresponding to the size of the abnormal shadow candidate to be detected, low density areas other than a low density area in a size corresponding to the abnormal shadow candidate to be detected, such as micro areas of noise or the like and areas of normal organizations in a larger size, can be excluded in advance from the search object, which achieves restriction of the number of false positives and significant reduction of processing time, compared with a case of performing detection processing for an abnormal shadow candidate on the entire breast image as conventionally. Further, by changing the mask size of the filters in the first smoothing processing and the second smoothing processing, the detection object areas to be extracted can be changed, corresponding to the size of an abnormal shadow candidate area to be detected. Further, by repeated execution of the processing in steps S12 to S15 in Fig. 4, with a change in the mask size, it is possible to extract detection object areas, with categorization of sizes of abnormal shadow candidate areas to be detected. Thus, it is possible to detect abnormal shadow candidates on plural detection models.

Next, operation in a second embodiment will be described. Fig. 9 is a flowchart showing abnormal shadow candidate detection processing in accordance with the second embodiment carried out by CPU 21 of the image processing device 2.

First, image data D of a breast image produced by photographing a breast by the image producing device 1 is input through a communication control section 26 and stored in a work area of a RAM 24 (step S21). Then, an input screen for input of the range of size of a lesion part to be detected from the image data D is displayed on the display section 23, and the range of the size of a lesion part to be detected is input via an operation section 22 from the input screen (step S22; input means).

A tumor shadow, in general, grows as the disease proceeds. In step S22, the ranges of sizes corresponding to the stages of disease progress may be displayed on the input screen so that an operator selectively inputs a size corresponding to the stage of the disease progress of a photographed patient, or the operator may be allowed to input the upper and lower values of the range of the size of the lesion part to be detected. The present embodiment will be described assuming that the ranges (5 to 15 mm, 15 mm to 30 mm) of the sizes corresponding to the stages of disease progress are displayed on the input screen, and the range of a size corresponding to the stage of disease progress of a photographed patient is selected by the operator.

In a case of a first diagnosis, the following operation may be arranged. That is, since it is necessary first to detect whether a lesion in a size of an early stage is present, a storage section 25, for example, is searched to determine whether abnormal shadow candidate detection data is stored for the same patient. If not stored, in other words, if the patient has not been diagnosed before by detection of abnormal shadow candidates of a breast image (namely, the case of the first diagnosis), the above described input screen is not displayed and the range of the size corresponding to the early stage may be automatically selected in the image processing device 2.

When the range of the size of the lesion part to be detected is input, the first smoothing filter and the second smoothing filter are set, corresponding to the range, having been input, of the size (step S23; filter setting means).

The first smoothing filter and the second smoothing filter are used in the area extraction processing described later. The mask size of the first smoothing filter and the sampling pitch of image data decide the minimum size of a detection object area to be extracted, and the mask size of the second smoothing filter and the sampling pitch of the image data decide the maximum size of a detection object area to be extracted. Herein, the first smoothing filter is set, correspond to the minimum size (lower limit) of a lesion part to be detected with the mask size thereof, and the second smoothing filter is set, corresponding to the maximum size (upper limit) of the lesion part to be detected with the mask size thereof.

In the second embodiment, for the first smoothing filter, mask sizes of 3 (pixels) x 3 (pixels) and 7x7 are prepared in advance. When 5 mm to 15 mm is selectively input as the range of the size of a lesion part to be detected, the first smoothing filter in the mask size of 3x3 is set. When 15 mm to 30 mm is selectively input, the first smoothing filter in the mask size of 7x7 is set. Thus, the first smoothing processing is performed. Further, for the second smoothing filter, mask sizes of 7x7 and 11x11 are prepared in advance. When 5 to 15 mm is selectively input as the range of the size of the lesion part to be detected, the second smoothing filter in the mask size of 7x7 is set. When 15 mm to 30 mm is selectively input, the second smoothing filter in the mask size of 11×11 is set. Thus, the second smoothing processing is performed.

Next, using the first smoothing filter and the second smoothing filter having been set in step S23, image data D is subjected to area extraction processing (step S24; extraction means). The area extraction processing extracts a detection object area corresponding to the size of the lesion part to be detected from the entire area of the image data D.

The same description as in the first embodiment can be given to the area extraction processing.

In Fig. 9, when the area extraction processing is completed, the detection object area of image data D5 extracted from the image data D is subjected to detection for an abnormal shadow candidate (step S25; abnormal shadow candidate detection means).

The same description as in the first embodiment can be given to the algorithm for detection of an abnormal shadow candidate.

After detecting an abnormal shadow candidate, the operation proceeds to step S26 in Fig. 9, and an abnormal shadow candidate detection result is displayed on the display section 23 (step S26). For example, a breast image based on image data D is displayed on the display section 23, and a detected candidate area as an abnormal candidate is recognizably displayed on the breast image, indicated by an arrow (annotation), displayed in color, or in some other way. Further, characteristic amounts of the abnormal shadow candidate may be displayed. Then, data of the medical image having been photographed and the abnormal shadow candidate detection data (supplemental information to the medical image, information on the size of the tumor shadow as the detection object in the medial image, information on the detection result of the abnormal shadow candidate in the medical image, and the like) are related to each other and stored in the storage section 25 (step S27), and the processing is completed.

As has been described above, the image recording device 2 in the second embodiment sets a first smoothing filter and a second smoothing filter corresponding to the size of a lesion part to be detected; reduces image data D of the original image to produce image data D1; applies the first smoothing processing, using the first smoothing filter corresponding to the size of the lesion part to be detected to the image data D1 to produce image data D2 having a micro low density area smoothed; applies the second smoothing processing, using the second smoothing filter corresponding to the size of the lesion part to be detected, to the image data D2 to produce image data D3 having a low density area smoothed, the area being in a size approximately the same as the upper limit of the lesion part to be detected; obtains the differences between the pixel values of the image data D3 and the pixel values of the image data D2 at the respective same positions to produce difference image data D4; threshold-processes the image data D4 so as to extract image data D5 in a low density area in the size of the detection object; and then performs detection of an abnormal shadow candidate in the extracted area of the image data D5.

Consequently, since a search area for detection of an abnormal shadow candidate in a breast image produced by the image producing device 1 can be limited corresponding to the size of a lesion part to be detected, low density areas other than a low density area in a size corresponding to the abnormal shadow candidate to be detected, such as micro areas of noise or the like and areas of normal organizations in a larger size, can be excluded in advance from the search object, which achieves restriction of the number of false positives and significant reduction of processing time, compared with a case of performing detection processing for an abnormal shadow candidate on the entire breast image as conventionally. Further, by repeated execution of the processing in steps S12 to S15 in Fig. 4, changing the mask size, it is possible to extract detection object areas, with categorization of sizes of abnormal shadow candidate areas to be detected. Thus, it is possible to detect abnormal shadow candidates on plural detection models.

The description in the above embodiment is a preferable example of a medical image system 100 in accordance with the present invention, and the invention is not limited thereto.

For example, although in the above embodiment, an example of detecting a tumor shadow from a breast image has been described, the invention may be applied to detection of a microcalcification cluster shadow, and is also applicable to detection of an abnormal shadow in another part of a human body for which a medical image has been photographed. Further, not limited to a radiation image of a breast, the invention is applicable also to a CT image, ultrasonic image, and MRI image.

Still further, also regarding the detailed structures and detailed operations of the respective devices constructing the medical image system 100, suitable changes and modifications can be made without departing from the spirit of the present invention.

## Claims

1. An abnormal shadow candidate detecting method, comprising:
a first smoothing processing process that performs a first smoothing processing of an inputted medical image, using a first smoothing filter;
a second smoothing processing process that performs a second smoothing processing on the medical image processed in the first smoothing processing process, using a second smoothing filter;
an extracting process that extracts a detection object area for an abnormal shadow candidate in a size of a lesion part to be detected, based on the medical image processed with the first smoothing processing and the medical image processed with the second smoothing processing; and
an abnormal shadow candidate detecting process that performs detection of the abnormal shadow candidate, in the detection object area extracted from the inputted medical image.

2. The abnormal shadow candidate detecting method of claim 1, further comprising a reducing process that reduces the inputted medical image to generate a reduced medical image, wherein the first smoothing processing process performs the first smoothing processing on the reduced medical image.

3. The abnormal shadow candidate detecting method of claim 1 or 2, wherein the inputted medical image comprises pixel values indicating densities;
the first smoothing processing process smoothes a first area in the inputted medical image, using the first smoothing filter, the first area being smaller than the abnormal shadow candidate area to be detected by the abnormal shadow candidate detecting process and having low densities compared with a surrounding area;
the second smoothing processing process smoothes an a second area in the medical image processed with the first smoothing processing, using the second smoothing filter, the second area having a similar size to the abnormal shadow candidate area to be detected and having low densities compared with a surrounding area; and
the extracting process extracts a detection object area for the abnormal shadow candidate by obtaining differences between values of pixels of the medical image processed with the second smoothing processing and values of corresponding pixels of the medical image processed with the first smoothing processing.

4. The abnormal shadow candidate detecting method of any one of claims 1 to 3, wherein the abnormal shadow to be detected is a tumor shadow.

5. An abnormal shadow candidate detecting device, comprising:
a first smoothing processing unit that performs a first smoothing processing of an inputted medical image, using a first smoothing filter;
a second smoothing processing unit that performs a second smoothing processing of the medical image processed by the first smoothing processing unit, using a second smoothing filter;
an extracting unit that extracts a detection object area, for an abnormal shadow candidate in a size of a lesion part to be detected, based on the medical image processed with the first smoothing processing and the medical image processed with the second smoothing processing; and
an abnormal shadow candidate detecting unit that performs detection of the abnormal shadow candidate, in the detection object area extracted from the inputted medical image.

6. The abnormal shadow candidate detecting device of claim 5, further comprising a reducing unit that reduces the inputted medical image to generate a reduced medical image, wherein the first smoothing processing unit performs the first smoothing processing on the reduced medical image.

7. The abnormal shadow candidate detecting device of claim 5 or 6, wherein the inputted medical image comprises pixel values indicating densities;
the first smoothing processing unit smoothes a first area in the inputted medical image, using the first smoothing filter, the first area being smaller than the abnormal shadow candidate area to be detected by the abnormal shadow candidate detecting unit and having low densities compared with a surrounding area;
the second smoothing processing unit smoothes a second area in the medical image subjected to the first smoothing processing, using the second smoothing filter, the second area having a similar size to the abnormal shadow candidate area to be detected and having low densities compared with a surrounding area; and
the extracting unit extracts a detection object area for the abnormal shadow candidate by obtaining differences between values of pixels of the medical image subjected to the second smoothing processing and values of corresponding pixels of the medical image subjected to the first smoothing processing.

8. The abnormal shadow candidate detecting device of any one of claims 5 to 7, wherein the abnormal shadow to be detected is a tumor shadow.

9. An abnormal shadow candidate detecting method, comprising:
a filter setting process that sets a first smoothing filter and a second smoothing filter, corresponding to a size of a lesion part to be detected from an inputted medical image;
an extracting process that extracts a detection object area, for an abnormal shadow candidate in a size of the lesion part to be detected from the inputted medical image, by using the first smoothing filter and the second smoothing filter having been set; and
an abnormal shadow candidate detecting process that performs detection of the abnormal shadow candidate on the detection object area extracted from the inputted medical image.

10. The abnormal shadow candidate detecting method of claim 9, further comprising an input process for inputting the size of the lesion part to be detected, wherein the filter setting process sets the first smoothing filter and the second smoothing filter, corresponding to the inputted size of the lesion part.

11. The abnormal shadow candidate detecting method of claim 9 or 10, further comprising a reducing process that reduces the inputted medical image to generate a reduced medical image, wherein the extracting process extracts the detection object area for the abnormal shadow candidate in the size of the lesion part to be detected, using the reduced medical image.

12. The abnormal shadow candidate detecting method of any one of claims 9 to 11, wherein the inputted medical image comprises pixel values indicating densities;
the first smoothing filter has a mask size corresponding to a minimum size of the lesion part to be detected;
the second smoothing filter has a mask size corresponding to a maximum size of the lesion part to be detected; and
the extracting process generates a first smoothed image, using the first smoothing filter, by smoothing a first area in the inputted medical image, the first area being smaller than the lesion part to be detected and having low densities compared with a surrounding area, generates a second smoothed image, using the second smoothing filter, by smoothing a second area in the first smoothed image, the second area having a similar size to the lesion part to be detected and having low densities compared with a surrounding area, and extracts the detection object area for the abnormal shadow candidate by obtaining differences between values of pixels of the first smoothed image and values of corresponding pixels of the second smoothed image.

13. The abnormal shadow candidate detecting method of any one of claims 9 to 12, wherein an abnormal shadow to be detected is a tumor shadow.

14. An abnormal shadow candidate detecting device, comprising:
a filter setting unit that sets a first smoothing filter and second smoothing filter, corresponding to a size of a lesion part to be detected from an inputted medical image;
an extracting unit that extracts a detection object area for an abnormal shadow candidate in a size of the lesion to be detected from the inputted medical image, by using the first smoothing filter and the second smoothing filter having been set; and
an abnormal shadow candidate detecting unit that performs detection of the abnormal shadow candidate in the detection object area extracted from the inputted medical image.

15. The abnormal shadow candidate detecting device of claim 14, further comprising an input unit for inputting the size of the lesion part to be detected, wherein the filter setting unit sets the first smoothing filter and the second smoothing filter, corresponding to the inputted size of the lesion part.

16. The abnormal shadow candidate detecting device of claim 14 or 15, further comprising a reducing unit that reduces the inputted medical image, wherein the extracting unit extracts the detection object area for the abnormal shadow candidate in the size of the lesion part to be detected, using the reduced medical image.

17. The abnormal shadow candidate detecting device of any one of claims 14 to 16, wherein the inputted medical image comprises pixel values indicating densities;
the first smoothing filter has a mask size corresponding to a minimum size of the lesion part to be detected;
the second smoothing filter has a mask size corresponding to a maximum size of the lesion part to be detected; and
the extracting unit produces a first smoothed image, using the first smoothing filter, by smoothing a first area in the inputted medical image, the first area being smaller than the lesion part to be detected and having low densities compared with a surrounding area, produces a second smoothed image, using the second smoothing filter, by smoothing a second area in the first smoothed image, the second area having a similar size to the lesion part to be detected and having lower densities compared with a surrounding area, and extracts the detection object area for the abnormal shadow candidate by obtaining differences between values of pixels of the first smoothed image and values of corresponding pixels of the second smoothed image.

18. The abnormal shadow candidate detecting device of any one of claims 14 to 17, wherein an abnormal shadow to be detected is a tumor shadow.
